# EUROPÄISCHE PATENTANMELDUNG

(11) **EP 0 567 733 A1**
(43) Veröffentlichungstag der Anmeldung: **03.11.1993**
(21) Anmeldenummer: 93102721.3
(22) Anmeldetag: 20.02.1993
(51) Int. Cl.: F16L 27/08

(54) **Kompensator**

(30) Priorität: 29.04.1992 DE 9205712 U
(71) Anmelder: IWK Regler und Kompensatoren GmbH, D-76288 Stutensee-Blankenloch (DE)
(72) Erfinder: Rogg, Hermann, Dipl.-Ing., W-7513 Stutensee 1 (DE); Ellinghaus, Kay, W-7500 Karlsruhe 1 (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Ein Kompensator weist zwei zylinderförmige Anschlußstücke (2,3) auf, die über einen Balg (7) miteinander verbunden sind. Auf ihrer Außenseite besitzen die Anschlußstücke (2,3) quer angeordnete, sie ganz oder teilweise umgreifende Flanschplatten (4,5). Seitlich des Balgs verlaufen mehrere Zuganker (8), die an den Flanschplatten (4,5) gehalten sind. Um die Flanschplatten (4,5) in kostengünstiger Weise und mit einem nur geringen Materialbedarf herstellen zu können, ist vorgesehen, daß jede Flanschplatte (4,5) aus vier formidentischen, im wesentlichen halbsichelförmigen Plattenelementen (9) gebildet ist. Dabei sind jeweils zwei Plattenelemente (9) derart angeordnet, daß zwischen ihnen ein Spalt (12) gebildet ist, in den die Zuganker (8) einsetzbar sind.

## Beschreibung

Die Erfindung betrifft einen Kompensator mit zwei Zylinderförmigen Anschlußstücken, die über einen Balg miteinander verbunden sind und auf ihrer Außenseite quer angeordnete, die Außenstücke ganz oder teilweise umgreifende Flanschplatten aufweisen, und mit mehreren Zugankern, die seitlich des Balgs verlaufen und an den Flanschplatten gehalten sind.

Ein derartiger Kompensator ist in der DE 33 03 633 C2 beschrieben und dient im wesentlichen dazu, eine Bewegung, insbesondere Schrägstellung der Anschlußstücke relativ zueinander zu ermöglichen, ohne daß übermäßige innere Spannungen in diesen auftreten. Um den Balgkörper vor Zerstörung zu schützen, ist es notwendig, die bei dem Kompensator auftretenden Zugkräfte zuverlässig aufzunehmen. Zu diesem Zweck ist an jedem Anschlußstück eine Flanschplatte befestigt. Zwischen den Flanschplatten sind aus Zugankern aufgebaute Zuggestänge angeordnet, die an ihren entgegengesetzten Enden jeweils mit einer Flanschplatte verbunden sind. Eine auf eines der Anschlußstücke wirkende Zugkraft wird so mit über die Flanschplatten und Zuggestänge auf das andere Anschlußtstück übertragen, ohne auf den Faltenbalg einzuwirken.

Die Zuganker werden üblicherweise aus Flachstahl gebildet, deren vorderer Endbereich mit einer Durchgangsbohrung versehen ist, über die Zuganker gelenkig angeschlossen werden können. An ihrem hinteren Ende werden die Zuganker üblicherweise mittels einer Schweißung oder eines Hintergreifens einer Auslinkung zugfest an der Flanschplatte angeschlossen. Die Flanschplatten, die ebenfalls aus Stahl bestehen und aus einer Stahlplatte herausgeschnitten bzw. - gebrannt werden, weisen entweder als einteilige Platte ein Durchgangsloch auf, mit dem die Flanschplatte auf das zugeordnete Anschlußstück aufgeschoben und anschließend an dieser befestigt wird, oder sie bestehen aus zwei Teilplatten, die jeweils bis zum halben Umfang des Anschlußstücks umspannen bzw. umgreifen. In beiden Fällen weisen die Flanschplatten bzw. Plattenteile eine geometrisch komplizierte Form auf und sind relativ groß. Auf diese Weise ist das Herausschneiden aus einer Stahlplatte aufwendig und zeitintensiv und erfordert einen hohen Materialbedarf bei einem relativ großen Verschnitt, so daß die Materialkosten sehr hoch sind.

Der Erfindung liegt die Aufgabe zugrunde, einen Kompensator der genannten Art zu schaffen, bei dem die Flanschplatten in kostengünstiger Weise herstellbar sind und einen nur geringen Materialbedarf erfordern.

Diese Aufgabe wird erfindungsgemäß dadurch gelöst, daß jede Flanschplatte aus vier formidentischen, im wesentlichen halbsichelförmigen Plattenelementen gebildet ist, wobei jeweils zwei Plattenelemente derart angeordnet sind, daß zwischen ihnen ein Spalt gebildet ist, in den die Zuganker einsetzbar sind.

Aufgrund der Formidentität der Plattenelemente können diese in relativ großen Stückzahlen und somit kostengünstig hergestellt werden. Mit der im wesentlichen halbsichelförmigen Ausgestaltung dieses Plattenelementes ist deren Querschnittsfläche an die auftretenden Belastungen bzw. inneren Spannungen weitgehend angepaßt, d.h. in den der Lasteinleitung infolge der Zuganker abgewandten Randbereichen der Plattenelemente ist eine relativ geringe Querschnittsfläche vorhanden, während das Plattenelement im Bereich der Zuganker eine relativ große Querschnittsfläche besitzt. Auf diese Weise kann der Materialbedarf verringert werden.

Die Plattenelemente ermöglichen aufgrund ihrer relativ geringen Größe und der einfachen geometrischen Form eine sehr gute Ausnutzung des Materials einer Stahlplatte, so daß der Verschnitt gering gehalten werden kann.

Die einzelnen Plattenelemente können mit Hilfe einer Maske oder einer Montagehalterung in einfacher Weise relativ zueinander exakt positioniert und an dem jeweiligen Anschlußstück befestigt bzw. angeschweißt werden, so daß ein kostengünstiger Zusammenbau erreicht werden kann.

Aufgrund der erfindungsgemäß gegenseitigen Anordnung zweier Plattenelemente derart, daß zwischen ihnen ein Spalt zum Einsetzen der Zuganker gebildet ist, entfällt die mechansiche Ausbildung einer entsprechenden Ausnehmung oder eines Loches oder Schlitzes, so daß die Herstellung weiter vereinfacht ist.

Eine Sichelform zeichnet sich dadurch aus, daß sowohl die innere Kante als auch die äußere Kante gekrümmt verlaufen, wobei der Abstand zwischen den beiden Kanten, d.h. die Breite eines sichelförmigen Elementes, von einem Eckbereich geringen Abstand zu einem Mittelbereich maximalen Abstands zunimmt und dann wieder bis zu einem weiteren Eckbereich geringen Abstands abnimmt. Erfindungsgemäß weist jedes Plattenelement eine Halbsichelform auf, wodurch die Krümmungen der inneren bzw. äußeren Kante praktisch keiner Beschränkung unterworfen sind. In vorteilhafter Ausgestaltung der Erfindung ist deshalb vorgesehen, daß die Krümmung der radial inneren Kante jedes Plattenelementes gleich der Krümmung seiner radial äußeren Kante ist. Auf diese Weise ist es möglich, die Plattenelemente aus einer Stahlplatte mit mininalem Verschnitt herauszuschneiden, da die Kanten nebeneinander liegender Plattenelemente direkt aneinanderstoßen und mittels eines einzigen Schnittes ausgebildet und getrennt werden können, d.h. beim Ausschneiden oder -brennen der äußeren Kante eines Plattenelementes kann gleichzeitig die innere Kante des benachbarten Plattenelementes ausgebildet werden. Die Anzahl der erforderlichen Schnitte kann somit wesentlich reduziert werden, wodurch die Herstellungkosten weiter verringerbar sind.

Vorzugsweise weisen die äußere und innere Kante des Plattenelementes eine konstante Krümmung auf, d.h. daß sie kreisbogenförmig verlaufen. Durch einen Versatz der Mittelpunkte der beiden Kreisbögen ist es möglich, die halbsichelförmige Ausgestaltung des Plattenelementes zu erzielen. Vorzugsweise nimmt die radiale Breite des Plattenelementes von einer Seitenkante, d.h. dem Eckbereich, zur entgegengesetzten Seitenkante kontinuierlich zu. Dabei ist vorgesehen, daß jeweils zwei Plattenelemente derart angeordnet sind, daß ihre längeren Seitenkanten einander zugewandt sind und zwischen sich den Spalt bilden. Auf diese Weise ist in einfacher Ausgestaltung sichergestellt, daß in denjenigen Bereichen der Plattenelemente, in denen die Zugankerkraft angreift, d.h. im Bereich des Spaltes, eine größere Querschnittsfläche zur Verfügung steht, wodurch die auftretenden Spannungen gering gehalten werden können.

Um das Einsetzen der Zuganker zu erleichtern und um insbesondere deren vorbestimmte Positionierung sicherzustellen, kann vorgesehen sein, daß in den längeren Seitenkanten, d.h. in den den Spalt definierenden Seitenkanten, Ausnehmungen zum Eingriff der Zuganker ausgebildet sind. Je nach Anzahl und Ausgestaltung der Zuganker kann sowohl die Anzahl der Ausnehmungen als auch deren Querschnittsform variieren.

Um eine gute Kraftübertragung zwischen den Anschlußstücken und den Zugplatten sicher zu stellen, sollte sich jedes Plattenelement im wesentlichen über einen Winkelbereich bis zu 90° erstrecken.

Als Befestigung für die Zuganker an den Plattenelementen sind mehrere Lösungen denkbar. Am weit verbreitesten und am konstruktiv einfachsten ist es, die Zuganker endseitig zu verschweißen. Es ist auch bekannt im hinteren Endbereich des Zugankers Halteelemente auszubilden, die sich an der dem Balg abgewandten Seite der Plattenelemente abstützen, so daß eine Zugkraft aufgenommen und abgeleitet werden kann.

Alternativ dazu ist es auch möglich, das Ende der Zuganker mit einem Gewinde zu versehen und auf die Zuganker jeweils eine Mutter oder dergleichen aufzuschrauben. Die Mutter legt sich an der dem Balg abgewandten Seite an das jeweilige Plattenelement an, wodurch die Zuganker unter Spannung gehalten sind.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: einen Angularkompensator in Seitenansicht,
- Figur 2: eine Ansicht eines Anschlußstückes mit Flanschplatten,
- Figur 3: die Anordnung mehrerer Plattenelemente bei ihrer Herstellung,
- Figur 4a-4g: mehrere mögliche Formen von Plattenelementen
- Figur 5a-5c: verschiedene Anschlußmöglichkeiten eines Zugankers an die Flanschplatten.

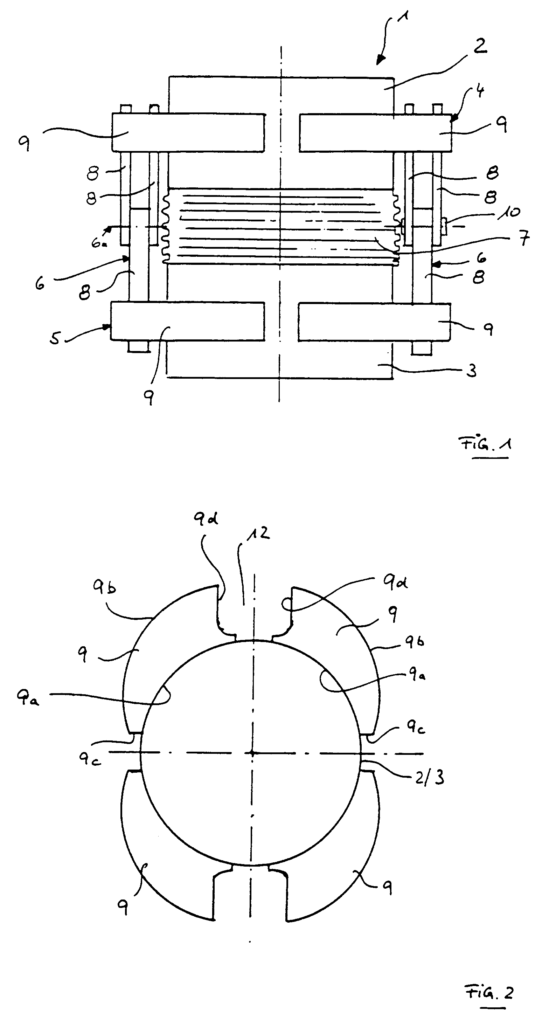

Ein Angularkompensator 1 gemäß Figur 1 weist zwei zylinderförmige Anschlußstücke 2 und 3 auf, die im wesentlichen in Fluchtung ausgerichtet sind. Die zylinderförmigen Anschlußstücke 2 und 3 sind über einen Faltenbalg 7 miteinander verbunden, der eine relative Winkelstellung zwischen den zylinderförmigen Anschlußstücken 2 und 3 zuläßt.

An den zylinderförmigen Anschlußstücken 2 und 3 ist jeweils eine Flanschplatte 4 bzw. 5 befestigt, vorzugsweise angeschweißt, die sich im wesentlichen senkrecht zur Längsachse der Anschlußstücke 2 bzw. 3 erstreckt. Die Flanschplatten 4 und 5 sind über beidseitig des Faltenbalgs 7 angeordnete Zuggestänge 6 miteinander verbunden. Jedes Zuggestänge 6 besteht aus mehreren Zugankern 8, die an ihrem hinteren Ende an den Flanschplatten 4 bzw. 5 vorzugsweise mit einer Schweißung befestigt sind. In jedem Zuggestänge 6 ist ein Schwenklager 6a ausgebildet, so daß die Anschlußstücke 2 und 3 relativ zueinander schwenkbar sind. Zu diesem Zweck weisen die Zuganker 8 in ihrem vorderen Endbereich jeweils eine Durchgangsbohrung auf. Die einzelnen Zuganker 8 überlappen sich derart, daß sich die Durchgangsbohrungen in Fluchtung befinden. Über einen in die Durchgangsbohrung eingesteckten Gelenkbolzen 10 sind die Zuganker 8 gelenkig miteinander verbunden. Auf diese Weise wird eine auf ein zylindrisches Anschlußstück 2 ausgeübte Zugkraft über die zugeordnete Flanschplatte 4 und die Zuggestänge 6 in die entsprechend andere Flanschplatte 5 und damit das andere Anschlußstück übertragen, ohne auf den Faltenbalg 7 einzuwirken.

Gemäß Figur 2 besteht jede der Flanschplatten 4 bzw. 5 aus je vier formidentischen halbsichelförmigen Plattenelementen 9, die über eine konkav gekrümmte, radial innere Kante 9a auf die Außenoberfläche des Anschlußstücks 2 bzw. 3 aufgeschweißt sind. Die Plattenelemente 9 liegen in einer Ebene, wobei jeweils zwei Plattenelemente derart angeordnet sind, daß zwischen ihnen ein Spalt 12 gebildet ist, in den die Zuganker 8 einsetzbar sind. Die Krümmung der inneren Kante 9a des Plattenelementes 9 entspricht der Krümmung des Anschlußstücks 2 bzw. 3.

Eine konvex gekrümmte, radial äußere Kante 9b besitzt die gleiche Krümmung wie die innere Kante 9a sowie das Anschlußstück 2 bzw. 3, wobei jedoch der Krümmungsmittelpunkt für die äußere Kante 9b relativ zu dem Krümmungsmittelpunkt für die innere Kante 9a versetzt ist, so daß die Kanten 9a bzw. 9b nicht parallel zueinander verlaufen. Der Abstand zwischen der inneren Kante 9a und der äußeren Kante 9b, d.h. die radiale Breite des Plattenelementes 9, verändert sich von seinem Minimalwert an einer dem Spalt 12 abgewandten Seitenkante 9c bis zu seinem Maximalwert an der entgegengesetzten, den Spalt 12 begrenzenden Seitenkante 9d kontinuierlich. Die beiden einander zugewandten Seitenkanten 9d zweier benachbarter Plattenelemente 9 begrenzen somit den Spalt 12.

Jedes Plattenelement 9 umfaßt bis zu 1/4 des kreisförmigen Umfangs des Anschlußstücks 2 bzw. 3, so daß dieses von vier Plattenelementen 9 im wesentlichen weitgehend umgriffen ist, wodurch eine gleichmäßige Kraftübertragung erreicht ist.

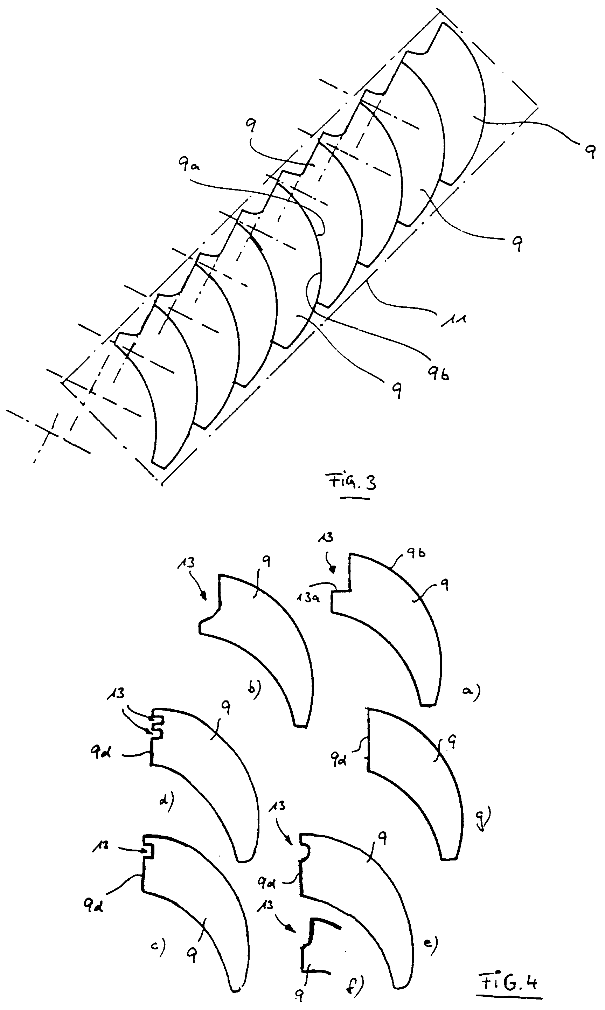

In Figur 3 ist dargestellt, wie acht gleichartige Plattenelemente 9 aus einer einzigen Stahlplatte 11 unter minimalem Verschnitt herstellbar sind. Die Plattenelemente 9 sind dabei unmittelbar aneinander grenzend angeordnet, wobei die äußere Kante 9b des unteren Plattenelementes 9 mit der inneren Kante 9a des gemäß Figur 3 darüberliegenden Plattenelementes 9 zusammenfällt. Aufgrund dieser geschachtelten Anordnung und der halbsichelförmigen Ausgestaltung der Plattenelemente 9 ergibt sich eine nur geringe Abmessung der in Figur 3 dargestellten Stahlplatte 11, wobei nach Ausbildung der Plattenelemente kaum Verschnittmaterial übrig bleibt.

In den längeren, den Spalt 12 begrenzenden Seitenkanten 9d der Plattenelemente 9 sind Ausnehmungen zum Eingriff der Zuganker ausgebildet, die das Einsetzen und das Befestigen der Zuganker 8 erleichtern. In den Figuren 4a bis 4g sind einige Ausführungsformen dieser Ausnehmungen 13 dargestellt. Gemäß Figur 4a weist die Ausnehmung 13 eine im wesentlichen rechteckige Form auf, wobei sie sich von der äußeren Kante 9b bis etwa zur Mitte der Höhe des Plattenelementes 9 erstreckt, so daß eine Schulter 13a gebildet ist, auf die ein Zuganker auflegbar ist. Im Unterschied dazu geht die Ausnehmung 13 gemäß Figur 4b unter einer Krümmung kontinuierlich in den ungeschwächten Bereich über.

In Figur 4c ist eine im wesentlichen rechteckige Ausnehmung 13 gezeigt, die in einem mittleren Bereich der Seitenkante 9d ausgebildet ist und deren Abmessungen an die Dicke des Zugankers angepaßt sind. Nachdem der Zuganker in die Ausnehmung 13 eingesetzt ist, ist er sicher positioniert und insbesondere an einer Lageveränderung in gemäß Figur 4c vertikaler Richtung infolge der beiderseitigen Ausnehmungswandungen gehindert. Figur 4d zeigt ein entsprechendes Ausführungsbeispiel für zwei Zuganker, wobei zwei im wesentlichen gleichartige, jeweils dreiseitig begrenzte Ausnehmungen 13 in der Seitenwand 9d des Plattenelementes 9 ausgebildet sind.

Statt einer rechteckigen Querschnittsform kann die Ausnehmung 13 auch halbkreisförmig ausgebildet sein, wie in Figur 4e gezeigt ist. Wenn zwei in Figur 4e gezeigte Plattenelemente 9 derart an einem Anschlußstück 2 bzw. 3 angeordnet werden, daß ihre langen Seitenkanten 9d annähernd aneinanderliegen, ist zwischen den Plattenelementen 9 ein kreisförmiger Durchlaß oder Spalt gebildet, durch den beispielsweise eine Zugstange hindurchgeführt werden kann. Wenn die halbkreisförmige Ausnehmung gemäß Figur 4e zur äußeren Seite hin offen ausgebildet wird, wie in Figur 4f dargestellt ist, kann die Zugstange in einfacher Weise von oben in die Ausnehmung eingesetzt werden.

In Figur 4g ist zum Vergleich ein Plattenelement gezeigt, bei dem an der längeren Seitenkante 9d keine Ausnehmung ausgebildet ist.

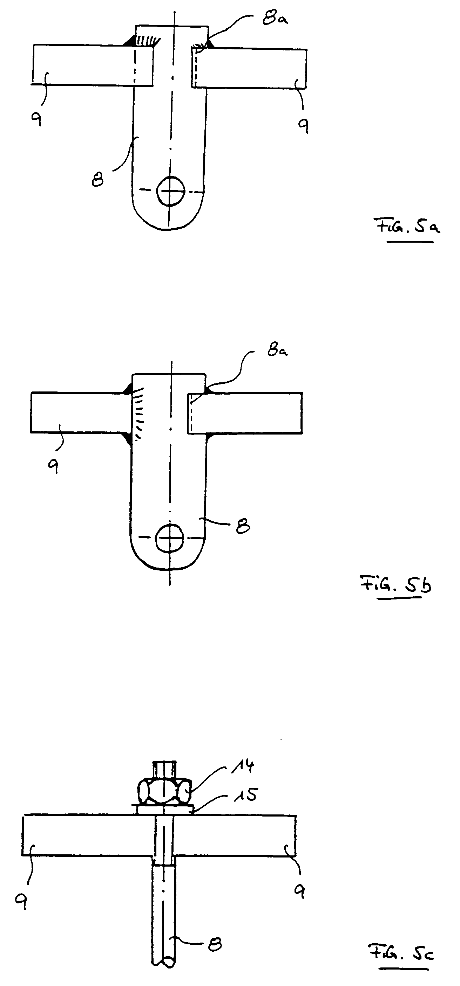

In den Figuren 5a bis 5c sind verschiedene Ausführungsformen für die Befestigung der Zuganker 8 and den Plattenelementen 9 gezeigt. Gemäß Figur 5a weisen die Plattenelemente 9 die in Figur 4c gezeigte Form auf, wobei die Ausnehmungen 13 im Zusammenwirken einen Durchlaß für den Zuganker 8 bilden, der einen im wesentlichen rechteckigen Querschnitt besitzt. Gemäß der linksseitigen Darstellung in Figur 5a wird der Zuganker 8 mit der dem nicht dargestellten Balg abgewandten Oberfläche des Plattenelementes 9 verschweißt. Gemäß der rechtsseitigen Darstellung weist der Zuganker 8 eine Ausklinkung 8a auf, so daß er auf der dem Balg abgewandten Seite des Plattenelementes anliegt und somit diese hintergreift. Der Zuganker ist in diesem Fall ebenfalls mit dem Plattenelement 9 verschweißt.

In Figur 5b ist eine entsprechende Befestigung gezeigt, wobei jedoch die Ausnehmung der Plattenelemente nach oben hin offen ist, wie es in den Figuren 4a und 4b gezeigt ist, oder gar keine Ausnehmung gemäß Figur 4g vorgesehen ist. Der Zuganker 8 ist in den zwischen den beiden Plattenelementen 9 gebildeten Spalt eingesetzt und mit den Plattenelementen verschweißt. Gemäß der linksseitigen Darstellung in Figur 5b ist sowohl auf der dem Balg zugewandten Seite als auch auf der entgegengesetzten Seite eine Schweißnaht ausgebildet. Gemäß der rechtsseitigen Darstellung umgreift der Zuganker 8 infolge einer Ausnehmung 8a das Plattenelement 9 und ist an diesem verschweißt.

Alternativ kann der Zuganker auch von einem runden Zugstab gebildet sein, wie es in Figur 5c dargestellt ist. Jedes Plattenlement 9 weist eine halbkreisförmige Ausnehmung (siehe Figuren 4e oder 4f) auf, wobei infolge des Zusammenwirkens der beiden Plattenelemente ein kreisförmiger Durchlaß gebildet ist, den der Zugstab durchdringt. Der Zugstab ist in seinem Endabschnitt mit einem Außengewinde versehen, auf das eine Mutter 14 aufgeschraubt ist. Die Mutter 14 liegt unter Zwischenschaltung einer Unterlegscheibe 15 an der dem Balg abgewandten Seite der Plattenelemente an diesem an und hält den Zustab unter Spannung in seiner Position.

## Patentansprüche

1. Kompensator mit zwei zylinderförmigen Anschlußstücken, die über einen Balg miteinander verbunden sind und auf ihrer Außenseite quer angeordnete, die Anschlußstücke ganz oder teilweise umgreifende Flanschplatten aufweisen, und mit mehreren Zugankern, die seitlich des Balgs verlaufen und an den Flanschplatten gehalten sind,
dadurch gekennzeichnet, daß jede Flanschplatte (4, 5) aus vier formidentischen, im wesentlichen halbsichelförmigen Plattenelementen (9) gebildet ist, wobei jeweils zwei Plattenelemente (9) derart angeordnet sind, daß zwischen ihnen ein Spalt (12) gebildet ist, in den die Zuganker (8) einsetzbar sind.

2. Kompensator nach Anspruch 1, dadurch gekennzeichnet, daß die Krümmung der radial inneren Kante (9a) jedes Plattenelementes (9) gleich der Krümmung seiner radial äußeren Kante (9b) ist.

3. Kompensator nach Anspruch 1 oder 2, dadurch gekennzeichnet, daß die radiale Breite jedes Plattenelementes (9) von einer Seitenkante (9c) zur entgegengesetzten Seitenkante (9d) kontinuierlich zunimmt.

4. Kompensator nach Anspruch 3, dadurch gekennzeichnet, daß jeweils zwei Plattenelemente (9) derart angeordnet sind, daß ihre längeren Seitenkanten (9d) einander zugewandt sind und zwischen sich den Spalt (12) bilden.

5. Kompensator nach Anspruch 3 oder 4, dadurch gekennzeichnet, daß in den längeren Seitenkanten (9d) Ausnehmungen (13) zum Eingriff der Zuganker (8) ausgebildet sind.

6. Kompensator nach einem der Ansprüche 1 bis 5, dadurch gekennzeichnet, daß jedes Plattenelement (9) sich im wesentlichen über einen Winkelbereich bis zu 90° erstreckt.

7. Kompensator nach einem der Ansprüche 1 bis 6, dadurch gekennzeichnet, daß die Zuganker (8) an der dem Balg (7) abgewandten Seite der Plattenelemente (9) durch Einklinken der Zuganker (8a) abgestützt sind.

8. Kompensator nach Anspruch 7, dadurch gekennzeichnet, daß die Zuganker mittels einer auf der dem Balg abgewandten Seite der Plattenelemente angeordneten Schraubverbindung gehalten sind.

9. Kompensator nach einem der Ansprüche 1 bis 8, dadurch gekennzeichnet, daß die Plattenelemente (9) mit den zylinderförmigen Anschlußteilen (2, 3) verschweißt sind.

10. Kompensator nach einem der Ansprüche 1 bis 9, dadurch gekennzeichnet, daß die Zuganker (8) mit den Plattenelementen (9) verschweißt sind.
